Europäisches Patentamt

European Patent Office

Office européen des brevets

(11) Publication number: **0 518 195 A2**

# EUROPEAN PATENT APPLICATION

(21) Application number: **92109361.3**

(22) Date of filing: **03.06.92**

(51) Int. Cl.⁵: **G06F 9/46**

(30) Priority: **12.06.91 US 713924**

(43) Date of publication of application:
**16.12.92 Bulletin 92/51**

(84) Designated Contracting States:
**DE FR GB**

(71) Applicant: **International Business Machines Corporation**
**Old Orchard Road**
**Armonk, N.Y. 10504(US)**

(72) Inventor: **Martinsky, Albert J.**
**902 Eagle Lane**
**Appollo Beach, FL 33572(US)**

(74) Representative: **Herzog, Friedrich Joachim, Dipl.-Ing.**
**IBM Deutschland GmbH Schönaicher Strasse 220**
**W-7030 Böblingen(DE)**

(54) **Method and system for exchanging information between application programs.**

(57) A method and system which provide a platform-independent Application Program Interface (API) implemented through library routines linked to application programs is disclosed. The API is independent of communication protocol and protocol boundaries. It can be used for communication support, data interchange, and to achieve efficient, integrated systems. Requester applications communicate with Server applications by passing command verbs through the system. With these verbs, a Requester application can open and close transactions, get messages, send and receive requests and send and receive responses. Any application can exchange information with any other application using this common set of verbs.

FIG. 2

12

REQUESTER APPLICATION 20 ↔ INTERFACE STUB 22 ↔ NETWORK FACILITIES 24 ↔ INTERFACE STUB 25 ↔ SERVER APPLICATION 26

14

EP 0 518 195 A2

This invention relates to a method and system for exchanging information between two or more computer application programs operating on different computer platforms. In particular, an interface for the exchange of information between applications running in different processing environments is disclosed.

In the financial industry, as in other industries, information needs change continuously due to changes in regulations, global economies, informational requirements, etc. In this environment, data may often be distributed across a variety of computer platforms throughout the world, but must always be available from any location. Obviously, storing identical data and applications on every computer is not the optimal solution. Typically, this challenge has been meet by the distribution of data and application programs that perform specific tasks across a variety of computer environments.

Unfortunately, these application programs do not always communicate with each other; so, when information must be exchanged, it is often necessary to develop customized interfaces to provide the communication. This solution works under limited circumstances in specific environments, but does not provide for adequate communication between applications in systems which include many different computers and processing environments. Therefore, it is desirable to provide a generalized interface for exchanging data between different application programs that are distributed across a variety of different computer platforms.

It is an object of this invention to provide a system for exchanging information across different computer platforms.

It is also an object of this invention to provide an application programming interface which remains the same across different supported computer operating platforms.

It is a further object of this invention to provide a method for exchanging information across different computer platforms.

It is still another object of this invention to provide a computer program operating across different computer platforms to promote the convenient exchange of information between application programs.

These and other objects solely and/or in combination are solved basically by the features laid down in the independent claims. Further advantageous embodiments are contained in the relevant subclaims.

The method and system of the invention in advantageous manner provide a platform-independent Application Program Interface (API) through library program routines linked to application programs. The API is independent of communication protocol and protocol boundaries. It can be used for communication support, data interchange, and to achieve efficient, integrated systems.

Requester applications communicate with Server applications by passing command verbs through the system. With these verbs, a Requester application can open and close transactions, get messages, send and receive requests and send and receive responses. Any application can exchange information with any other application using this common set of verbs.

In the following description the invention as claimed is described in more details in connection with the drawing showing an embodiment of the invention. In the drawing:

FIG. 1 shows an example of an exchange of data between a Requester application and a Server application;

FIG. 2 is a block diagram of the relationship between the Interface Stubs and the Requester, Server and Network Facilities; and

FIG. 3 is a flow diagram of the inventive method.

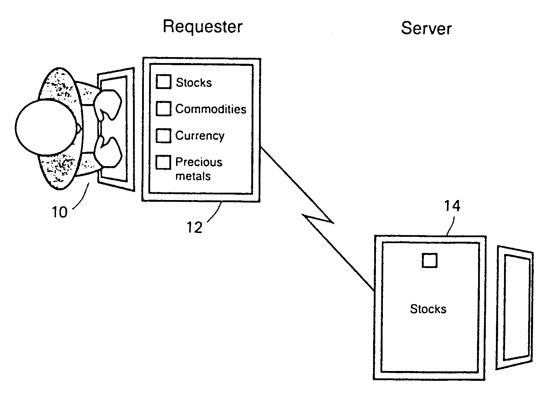

Referring to FIG. 1, in the financial services industry, as in other industries, it is necessary to distribute application programs over a variety of different computer platforms. For example, an individual 10 sitting at his Computer Workstation 12 may have a need to obtain information about one or more commonly traded stocks. That information, however, is not available at the requester's location, but is available on another Computer System 14 which may be located in close proximity to the Requester's Computer Workstation 12, or remotely. The problem is one of passing the request for information to the Computer System 14, referred to as the Server, and then receiving the data back at the Requester Computer Workstation 12.

Computers 12 and 14 may be similar computer platforms, or totally different and non-compatible systems. One advantage of the present invention is that information can be exchanged regardless of the type of computer platform. In this example, Computer 12 is an IBM Personal System/2 workstation running the OS/2 Operating System and Computer 14 is a RISC System/6000 computer running the AIX Operating System (IBM, AIX, RISC System/6000, OS/2 and Personal System/2 are trademarks of IBM Corporation). It would be evident to one skilled in the art, however, that computers 12 and 14 could be of any make and model and that the primary motivation behind the invention is to enable communication between computer applications regardless of the types and models of the computers.

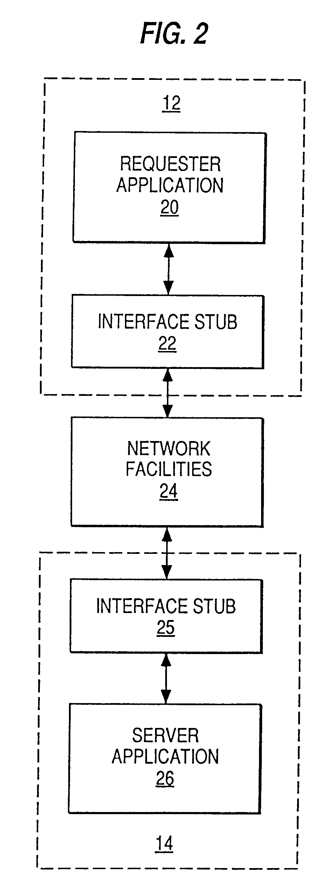

FIG. 2 shows a schematic representation of the relationships between Requester Computer System 12 and Server Computer System 14. Residing on Computer 12 is the Requester Application 20 which in this example is a financial application program that issues a request for information of some type. Associated with Requester Application 20 is an Interface Stub 22, which will be discussed more fully below. Interface Stub 22 is in communication with a Network Facilities Component 24 which handles all of the communication between Computers 12 and 14. Network Facilities 24 can be any type of communication facility as commonly known in the art. Examples include local area networks, wide area networks, Advance Peer To Peer Communications, LU6.2 Networks, etc. It is beyond the scope of this invention to describe these Network Facilities in greater detail and those skilled in the art are very familiar with such communication facilities.

Within Server Computer System 14 is another Interface Stub 25 also in communication with the Network Facilities 24. This second Interface Stub 25 is in communication with Server Application 26, which is the application program that provides the information requested by the Requester Application 20. As can be readily seen, all communications between the Requester Application 20 and the Server Application 26 are handled by Stubs 22 and 25, using the Network Facilities 24.

An Application Program Interface (API) defines the request and response protocols used by Requester and Server applications in their communications with Interface Stubs 22 and 25, respectively. Both Requester applications and Server applications uses the API verbs to communicate with the Stubs 22, 25. Software implementing the API processing is contained within Interface Stubs 22, 25, which are linked with the application programs to provide a "CALL" interface for requesting the functions.

API operations conceptually fall into one of three classes:

o Control flow

These operations deal with the control parameters and protocol between the Interface Stubs and the application programs.

o Data flow

These operations deal with how the application-specific data entities are passed to and from the Interface Stubs for both Requester and Server applications. Data flow is specified through API verb arguments.

o Service flow

These operations deal with services that the Interface Stubs provide to both Requester and Server applications. There are seven API verbs:

o OPEN - This verb is used to identify an application to a Stub. The Stub returns a token that is used on all subsequent calls to the Stub. Applications, both Requester and Server, can issue multiple OPEN verbs. Until an OPEN is issued by the application, the Stub considers that the application does not exist.

o SEND_REQUEST - This verb is used by Requesters to forward a request to a Server. Initiation of a SEND_REQUEST establishes a Unit of Work. The Stub generates an ID for each Unit of Work, which uniquely identifies that Unit of Work. All subsequent communications that are a result of the SEND_REQUEST are identified by the UNIT_OF_WORK_ID.

o GET_REQUEST - This verb is used by Server applications to receive requests. Using the GET_REQUEST verb, the Server application can retrieve a single block for a request associated with one of the functions that it provides. The application can either choose to wait for a request or receive control whether or not a request is received. The UNIT_OF_WORK_ID associated with the request is passed to the Server and is used in all subsequent communications for this request.

o SEND_RESPONSE - This verb is used by Requester and Server applications to send responses.

o GET_RESPONSE - This verb is used by applications to retrieve data sent with the SEND_RESPONSE verb. Two options are presented: (1) return when a response is received; and (2) return immediately with either a response or an indication that no response is available. The generic form of this verb is to return a response to a specific request. However, parameters are available to tailor GET_RESPONSE verbs to return responses from several units of work, and responses to several specific requests. When these parameters are used, only one response is returned per verb even though several responses that meet the criteria may be available.

o MESSAGE - This verb may be used by Requester and Server applications to retrieve messages from the Stubs which explain non-Zero REASON_CODES. This verb is independent from all others in that it may be issued by the application program any time a message definition is required. It does not require a TOKEN or UNIT_OF_WORK_ID to have been established.

o CLOSE - This verb is used to terminate an application's connection with the Stub. An application may close a single TOKEN or all the TOKENs it has open. After the CLOSE verb, no further verbs will be allowed for the TOKEN.

An application program, either a Requester or Server, may need to send multiple bits of data for a

3

specific request/response. To insure that these blocks are all associated with the same request/response, the application program must utilize the LAST_BLOCK indicator. When sending a multiple block request/response, the application program sets the LAST_BLOCK field to an 'N' indicating that this block is not the last in the series. All blocks, except the last, will be sent to the Stub with the LAST_BLOCK field set to an 'N'. On the last block in the series, the application program sets the LAST_BLOCK field to a 'Y', indicating to the Stub that this is the last block of data associated with this verb. If an application sends a single block for a request/response, the LAST_BLOCK field must be set to a 'Y' indicating there are no more blocks associated with this verb.

When a Requester application issues a SEND_REQUEST verb, the application sets the BEGIN_UNIT_WORK to a 'Y', indicating that this is the start of a Unit of Work. The Stub generates a unique UNIT_OF_WORK_ID that is returned to the Requester and is also passed to the Server. The UNIT_OF_WORK_ID identifies the request and is used on all additional communications for the request. The termination of a Unit of Work is controlled by the END_UNIT_WORK field. When set to a 'Y', the Stub ends the current Unit of Work.

A Unit of Work can be as small as a single data item sent to a Server application. In this case, the Requester application would issue a SEND_REQUEST verb with the BEGIN_UNIT_WORK set to a 'Y' and the END_UNIT_WORK set to a 'Y' indicating that this is the start and the end of the Unit of Work. The Server application can issue a GET_REQUEST verb to retrieve the data but it cannot issue a SEND_RESPONSE because the Unit of Work is complete. A more complicated example of a Unit of Work is the case where a Requester issues multiple SEND_REQUEST verbs to send multiple blocks for a request. All of the blocks are tied to a single UNIT_OF_WORK_ID. The Server issues multiple GET_REQUEST verbs to retrieve the data, processes the data and then issues multiple SEND_RESPONSE verbs. The Requester then issues a SEND_RESPONSE verb to notify the Server that it correctly received the responses. In the preceding instance, the BEGIN_UNIT_WORK is set to 'Y' on the first SEND_REQUEST and to an 'N' on all subsequent SEND_REQUEST verbs for the function request. The END_UNIT_WORK is set to an 'N' for all verbs except the last Requester SEND_RESPONSE. When the END_UNIT_WORK is set to a 'Y', the Stub determines that this is the end of this Unit of Work. The Stub deletes the information association with this Unit of Work and no subsequent data may be sent for the Unit of Work.

Applications may work at several different levels of complexity. The simplest is an application that requests a specific function and one that provides that function. In this case the following scenario applies. All communications between Stubs are via Network Facilities 24. The following example assumes the the Requester and Server applications have previously issued OPEN calls to identify them to their respective Stubs.

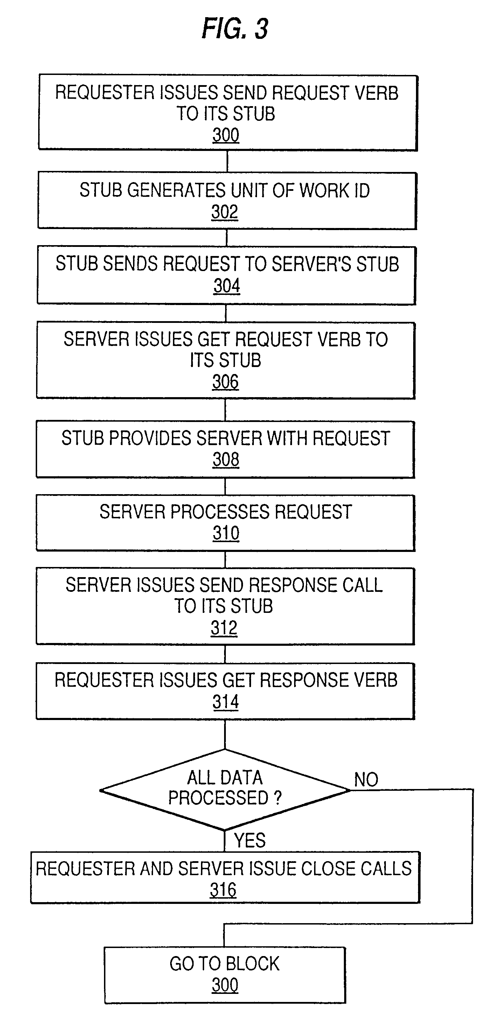

Referring to FIG. 3, the Requester application will issue a SEND_REQUEST verb to request that a function be performed (Block 300). As a result of the SEND_REQUEST verb, the Stub will generate a unique UNIT_OF_WORK_ID which will be returned (Block 302). This ID will be used to identify all data associated with this request. The Requester's Stub then sends the function request to the Server's Stub (Block 304).

The Server application will issue a GET_REQUEST verb to receive the request (Block 306). The Stub will provide the Server with the request data and with the UNIT_OF_WORK_ID that corresponds with this request (Block 308). The Server will process the request (Block 310) and issue a SEND_RESPONSE call to its Stub to send the response data back to the Requester (Block 312). The Server application must insure that the associated UNIT_OF_WORK_ID is specified. If the Server issues a GET_REQUEST followed by a SEND_RESPONSE, then the Server application will not need to change the UNIT_OF_WORK_ID field; it will still be set to the ID received on the GET_REQUEST verb.

The Requester application will issue the GET_RESPONSE verb with the associated UNIT_OF_WORK_ID (Block 314). The Stub will return the response data to the Requester. Again, if the application issues a SEND_REQUEST verb followed by a GET_RESPONSE, the Requester application will not have to update the UNIT_OF_WORK_ID field. It will still be set from the SEND_REQUEST verb. This sequence will continue until all the data are processed. When the applications are completed, they will both issue the CLOSE verb to notify the Stub that they will no longer request/serve functions (Block 316).

The OPEN verb is issued by both the Requester and the Server application programs. The purpose of the OPEN verb is to identify the application program to the Stub. Server applications may service one or more functions. The application may open all or a subset of the functions that it will provide. Each function may be opened or closed independently.

The application program issues the following verb:

```
CALL OPEN(AIM_PARM,
          NUM_FUNCTION_NAMES,
          FUNCTION_NAMES_ARRAY)
```

AIM__PARM is the data structure that contains the parameters to be used by the Stub.

The NUN__FUNCTION__NAMES parameter is an application defined field containing the number of function names specified in the FUNCTION__NAMES__ARRAY. The number can be zero (0) or more. Zero indicates that the application is only a Requester or that none of the functions it serves are to be opened. The FUNCTION__NAMES__ARRAY is a user defined array containing the fully qualified names of the functions to be opened for this Server application.

A Requester application issues the SEND__REQUEST verb to request that a particular function be performed. The application program will issue the following verb:

```
CALL SEND_REQUEST(AIM_PARM,
                  REQUEST_DATA_AREA)
```

AIM__PARM is the data structure that contains the parameters to be used by the Stub.

The REQUEST__DATA-AREA parameter is a data area defined by the application containing the information needed by the requested function.

The GET__REQUEST is issued by the Server application program to get a function request from the Stub. If there are no requests, the Server application can wait until one arrives or receive control with a RETURN__CODE indicating that no requests were available. If the application chooses to wait for a request, it can specify a timeout value to avoid prolonged waits. The RETURN__CODE and REASON__CODE will specify that a timeout has occurred as opposed to a valid request having arrived. The application program issues the following verb:

```
CALL GET_REQUEST(AIM_PARM,
                 REQUEST_DATA_AREA,
                 NUM_FUNCTION_NAMES,
                 FUNCTION_NAMES_ARRAY)
```

AIM__PARM is the data structure that contains the parameters to be used by the Stub.

The REQUEST__DATA__AREA is a field defined by the application program where the Stub will store the data associated with this verb.

The NUM__FUNCTION__NAMES field is an application defined field containing the number of function names specified in the FUNCTION__NAMES__ARRAY.

The FUNCTION__NAMES__ARRAY is an application-defined array that contains the fully qualified name(s) of one or more functions for which the server will accept request data. The application can set the NUM__FUNCTION__NAMES field to one and the first entry of the FUNCTION__NAMES__ARRAY to get an asterisk '*', padded on the right with blanks. In this case, the Stub will return any single outstanding request associated with any function that the application services. The FUNCTION__NAME field in the AIM__PARM will be updated with the fully qualified function name associated with the request. The fully qualified function name consists of the function name, a period '.' and the qualifier (e.g., 'fundstransfer.london').

Both Server and Requester applications use the SEND__RESPONSE verb to send data associated with a UNIT__OF__WORK__ID. The UNIT__OF__WORK__ID is used by the Stub to route the data back to the Requester. An application may leave the UNIT__OF__WORK__ID in the AIM__PARM structure the same as it was from a previous verb or it may be changed to an ID from a different request. The application issues the following verb:

```
        CALL SEND_RESPONSE(AIM_PARM,
                  RESPONSE_DATA_AREA,
                  EXCEPTION_DATA_AREA)
```

AIM__PARM is the data structure that contains the parameters to be used by the Stub.

The RESPONSE__DATA__AREA is a field defined by the application program that contains the response data associated with this verb.

The EXCEPTION__DATA__AREA is a field defined by the application program that contains the exception data associated with this verb.

An application, either Server or Requester, uses the GET__RESPONSE verb to retrieve a response associated with a UNIT__OF__WORK__ID that was sent by another application using the SEND__RESPONSE verb.

The format of the GET__RESPONSE verb is:

```
        CALL GET_RESPONSE(AIM_PARM,
                  RESPONSE_DATA_AREA,
                  EXCEPTION_DATA_AREA,
                  NUM_UNIT_OF_WORK_ID,
                  UNIT_OF_WORK_ID_ARRAY,
                  NUM_TOKENS,
                  TOKEN_ARRAY)
```

AIM__PARM is the data structure that contains the parameters to be used by the Stub.

RESPONSE__DATA__AREA is an area defined by the application where the Stub will store the response data associated with this request.

EXCEPTION__DATA__AREA is the application defined data area that will be used by the Stub to store any exception information associated with this verb.

NUN__UNIT__OF__WORK__ID is a field that is used to specify the count of UNIT__OF__WORK__IDs contained in the UNIT__OF__WORK__ID__ARRAY.

The UNIT__OF__WORK__ID__ARRAY is a single dimension array that is updated by the application program. It may contain one or more UNIT OF WORK IDs for which the verb will obtain a response.

The NUN__UNIT__OF__WORK__ID and UNIT__OF__WORK__ID__ARRAY can be used by the application program to request a single response associated with a list of requests. The Stub will check the list of IDs and if there is a response available for one of them, the Stub will store the response data in the RESPONSE__DATA__AREA and update the UNIT__OF__WORK__ID field in the AIM__PARM structure with the ID associated with the response.

The NUM__TOKENS are used to specify the count of TOKENs contained in the TOKEN__ARRAY. The number can be zero or more. If the number is zero, the TOKEN field in the AIM__PARM must contain a valid TOKEN.

The TOKEN__ARRAY is a single dimension array that is updated by the application program. Either the TOKEN__ARRAY must contain one or more TOKENs or the TOKEN field in the AIM__PARM must contain a valid TOKEN for which the verb will obtain a response.

The NUM__TOKENS and the TOKEN__ARRAY are used by the Stub to check on responses associated with requests issued for multiple OPENs. In this case, the Stub checks the list of TOKENs to see if there are any responses available. If a response is available, the Stub stores the response into the RESPONSE__DATA__AREA and updates the TOKEN and UNIT__OF__WORK__ID fields indicating the correct TOKEN and ID. When the NUM__TOKENS and TOKEN__ARRAY are used, the Stub checks only those TOKENS specified in the TOKEN__ARRAY.

The NUM__UNIT__WORK__ID and the NUM__TOKENS may be zero. In this case the GET__RESPONSE verb requires that the TOKEN field in the AIM__PARM contain a valid TOKEN. A valid

6

TOKEN is required to issue the GET_RESPONSE verb. The Stub checks for any outstanding responses associated with the TOKEN in the AIM_PARM.

An application may issue a GET_RESPONSE verb using the NUM_UNIT_OF_WORK_ID, UNIT_OF_WORK_ID_ARRAY, NUM_TOKENS and TOKEN_ARRAY fields. In this case, the Stub will first check the UNIT_OF_WORK_ID_ARRAY and then the TOKEN_ARRAY to see if there are any outstanding replies. The first response found is returned to the application. In all cases, the GET_RESPONSE returns a single response.

The MESSAGE verb is used to retrieve messages from the Stub. Whenever a non-zero REASON_CODE is returned by the Stub, the message which explains the code may be retrieved by the application program via the MESSAGE verb. The format of the MESSAGE verb is :

```
CALL MESSAGE(AIM_PARM,
             MESSAGE_DATA_AREA,
             MESSAGE_RETURN_CODE)
```

AIM_PARM is the data structure that contains the parameters to be used by the Stub.

MESSAGE_DATA_AREA is an area defined by the application where the Stub will store the message returned to the application.

MESSAGE_RETURN_CODE is a field defined by the application program that the Stub will update with a code that will designate the completion status of the MESSAGE verb.

The CLOSE verb is used to terminate the connection between the application and the Stub. The format of the CLOSE verb is:

```
CALL CLOSE(AIM_PARM,
           NUM_FUNCTION_NAMES,
           FUNCTION_NAMES_ARRAY)
```

AIM_PARM is the data structure that contains the parameters to be used by the Stub.

The NUM_FUNCTION_NAMES parameter is an application defined field containing the number of functions names specified in the FUNCTION_NAMES_ARRAY.

The FUNCTION_NAMES_ARRAY is a user defined array containing the fully qualified names of the functions serviced by this application that are to be closed. The fully qualified function name consists of the function name, a period '.' and the qualifier (e.g., 'funds-transfer.london').

Server applications may provide services for multiple functions. However, throughout the day there may be times that an application may not be able to provide an individual function, e.g., a database may have to be refreshed. During this period, the Server application would issue a CLOSE for the specific function. When the application is ready to continue providing the function, the application would issue the OPEN for the specific function. By specifying the NUM_FUNCTION_NAMES and the FUNCTION_NAMES_ARRAY parameters, the application can identify a specific functions that it will no longer provide.

While the invention has been described with reference to a preferred embodiment, it will be understood by those skilled in the art that various changes can be made in the system and method without departing from the spirit and scope of the invention. Accordingly, the scope of the invention shall only be limited as set forth in the following claims.

**Claims**

1. An interface computer program for facilitating the exchange of information between a first computer application program and a second computer application program, said first and second computer programs operating on at least one computer processor, comprising:
    a. means for identifying the first computer application program to the interface computer program;
    b. means for forwarding requests from the first computer application to the second computer application via the interface computer program;

c. means for receiving requests from the first computer application program by the second computer application program;

d. means for responding to requests from the first computer application program;

e. means for retrieving the responses from the second computer application program; and

f. means for terminating the connection between the first computer application program and the interface computer program.

2. The interface computer program as claimed in claim 1 wherein said means for identifying, means for forwarding, means for receiving, means for responding, means for retrieving and means for termination include library routines which implement calls associated with said respective means.

3. The interface computer program as claimed in claim 1 or 2 wherein said program is divided into two interface stubs, each of which is associated with one of said two computer programs.

4. The interface computer program as claimed in claim 1, 2 or 3 further comprising means for exchanging messages between said two computer programs.

5. A method for exchanging information between a requester computer application program and a server computer application program each of which has an associated interface program comprising the following steps:

the requester issuing a request call to its interface stub;

the requester's interface stub sending the request call to the server's interface stub;

the server issuing a get request call to its interface stub;

the server's interface stub providing the request to the server;

the server processing the request;

the server issuing a send response call to its stub;

the server's interface stub sending the response to the requester's interface stub;

the requester issuing a get response call to its stub; and

the requester's interface stub sending the response to the requester.

6. The method as claimed in claim 5 further comprising the following step after the sending the response to the requester step:

the requester and server issuing close calls to their respective interface stubs.

7. The method as claimed in claim 5 or 6 wherein said requester's interface stub sending the request step includes the step of generating a unit of work id.

8. A system for exchanging information between at least two computer application programs operating on different computer platforms comprising:

means for transmitting data between said computer platforms; and

interface programming means associated with each of said computer application programs, said interface programming means providing library routines for interpreting program calls using a common application programming interface from said application programs and means for exchanging information with said means for transmitting;

whereby application programs can exchange information with a common application programming

8

interface without regard to the computer platform.

9. The system as claimed in claim 8 wherein said library routines consist of computer programming code that interpret programming call statements.

10. The system as claimed in claim 8 or 9 wherein said call statements include calls for identifying applications to said interface programming means, calls for requesting information, calls for sending information and calls for receiving information.

Requester

Server

| Stocks |
| Commodities |
| Currency |
| Precious metals |

10

12

14

Stocks

## FIG. 2

**12**

REQUESTER
APPLICATION
20

INTERFACE STUB
22

NETWORK
FACILITIES
24

INTERFACE STUB
25

SERVER
APPLICATION
26

**14**

## FIG. 3

```
┌─────────────────────────────────────┐
│   REQUESTER ISSUES SEND REQUEST VERB │
│             TO ITS STUB              │
│                 300                  │
└─────────────────────────────────────┘
                  │
┌─────────────────────────────────────┐
│     STUB GENERATES UNIT OF WORK ID   │
│                 302                  │
└─────────────────────────────────────┘
                  │
┌─────────────────────────────────────┐
│   STUB SENDS REQUEST TO SERVER'S STUB│
│                 304                  │
└─────────────────────────────────────┘
                  │
┌─────────────────────────────────────┐
│   SERVER ISSUES GET REQUEST VERB TO  │
│               ITS STUB               │
│                 306                  │
└─────────────────────────────────────┘
                  │
┌─────────────────────────────────────┐
│    STUB PROVIDES SERVER WITH REQUEST │
│                 308                  │
└─────────────────────────────────────┘
                  │
┌─────────────────────────────────────┐
│        SERVER PROCESSES REQUEST      │
│                 310                  │
└─────────────────────────────────────┘
                  │
┌─────────────────────────────────────┐
│   SERVER ISSUES SEND RESPONSE CALL   │
│             TO ITS STUB              │
│                 312                  │
└─────────────────────────────────────┘
                  │
┌─────────────────────────────────────┐
│   REQUESTER ISSUES GET RESPONSE VERB │
│                 314                  │
└─────────────────────────────────────┘
                  │
             ╱ ALL DATA ╲      NO
            ╱ PROCESSED ? ╲─────────┐
             ╲           ╱          │
                  │ YES             │
┌─────────────────────────────────┐ │
│ REQUESTER AND SERVER ISSUE CLOSE │ │
│             CALLS                │ │
│              316                 │ │
└─────────────────────────────────┘ │
                  │                 │
                  │◄────────────────┘
┌─────────────────────────┐
│      GO TO BLOCK         │
│          300             │
└─────────────────────────┘
```